# EUROPEAN PATENT APPLICATION

(11) **EP 2 708 454 A1**
(43) Date of publication of application: **19.03.2014**
(21) Application number: 12382362.7
(22) Date of filing: 18.09.2012
(51) Int. Cl.: B62D 55/265, B62D 55/075

(54) **Robot for treating metal structures**

(71) Applicant: Eliot Systems, S.L., 46250 L'Alcudia (Valencia) (ES)
(72) Inventor: Masia Perales, Jordi, 46250 L'Alcudia (Valencia) (ES)
(74) Representative: Temino Ceniceros, Ignacio

(57) **Abstract**

Robot for treating metal structures, of the type comprising two track driving units (1) and displacement by magnetic soles (5,6) on an endless belt (4) and where said track driving units (1) are longitudinally attached through two intermediate hinges (14) with a central body (12) and two side bodies (13), wherein said intermediate hinges (14) are configured so that each track driving unit (1) oscillates laterally with respect to the opposite track and it comprises transverse hinging means (15, 16, 17) joined together to the support frame (2) and to the side bodies (13) configured so that each track driving unit (1) turns with respect to the opposite track; and it also comprises stabilization means (18, 19, 20) of the robot assembly configured to maintain a constant and uniform pressure on the treating surface .

## Description

The present invention refers to a robot for treating and/or working external metal structures of large structures, such as large circular tanks of petrochemical, food, and ceramic industry, the keel of a ship or other similar structures of large dimensions.

### State of the art

In the present state of the art, the treatment technique and/or working of external surfaces or parts in steel structures is well known in skyscraper maintenance, ships, etc. which require periodic cleaning and painting. Furthermore, the maintenance of a building in a large vault is not easy for operators and is only possible with the use of scaffolding structures. Nowadays, this operation is carried out using movable bridge means that are lifted and lowered and moved along the entire surface of the structure with workers on board.

The periodic maintenance of the keel and hull of ships that must be almost annually sanded for the removal of marine scales and then revarnished etc. is also known. These operations also have to be carried out using complex and expensive means that involve the additional cost of employing specialized workers. The need to work metallic surfaces for abrasive blasting or painting of structures is also known. Furthermore, workers suspended along the surfaces are always exposed to the danger of accidents and falling.

To avoid the above problems Sin Andamios Robot is know from EP 04025163.3 (published as EP-A-1 650 116, April 26, 2006), that discloses a track-laying robot whose track-links are equipped with magnetic soles and wherein the driving means consist in two opposite and independent motor means, remote-controlling the two opposite tracks independently. In this way the robot can be moved in any direction moving one or the other track of the robot. Other caterpillar magnetic-path robots are known, see US-A-5884642, JP-A-02092788, JP-A-2001270478, EP-A-0248659, JP-A-03231079, GB-A-2203108.

The above solutions have the problem of being difficult to move in any direction.

Furthermore the existing magnetic-track robots are limited in moving on surfaces that are not perfectly plane. In particular when surface change is not plane, magnetic track adherence is reduced with the danger that the robot may fall.

GB-A-978600A discloses an apparatus carrier for using on steel wall, having two endless chains 8,9 respectively operated by two motors 6, 7, that are hinged longitudinally in an intermediate position (4) to allow working also on curved surfaces. GB-A-2103162 discloses an apparatus moving on wall using three on tandem-oscillating of endless track crawlers per side of the vehicle apparatus, the oscillation of the endless tracks being obtained for use in not flat surfaces. US-A-5435405 discloses a reconfigurable mobile vehicle with magnetic tracks having four outriggers alternatively mounted to the rear of the vehicle (two in front and two in back).

EP-A-0248659 discloses a self propelled magnetic track vehicle wherein each of the track assemblies is mounted on a respective pair of arms projecting laterally from the body.

GB-A-1545232 discloses an improved device for surface treatment in which the two tracks are sideways hinged by respective sideways arms able to move on curved surfaces.

However, the closest State of the art is the document ES 2 329 389 which disclose a robot for treating and/or working of surfaces or external parts in large steel structures, said robot being of the tracked type for its movement with magnetic soles on the tracks of said track-laying robot, comprising two independent drive-units hinged sideways to each other in a respective location with respective side-hinging means, said side-hinging means comprising at least a longitudinal intermediate hinge means having a longitudinal intermediate axis substantially able to allow one unit to tilt sideways with respect to the other **characterized in that** said side-hinging means also comprise a transverse hinge means, said transverse hinge means having a transverse rotational coupling substantially able to allow one unit to rotate with respect to the other, and wherein in front and/or rear of each unit, arm means are provided, said arm means being equipped with free-advance magnetic track supported by respective free-rotating wheels.

However, the robot described herein has problems of adhesion and adaptability of both tracks independently on curved surfaces.

### Description of the invention

The problem of adherence described in the State of the art is resolved through the use of two fully independent tracks and joined each of them by two hubs with axis and flanges to side supports, and these, in turn, joined by a plurality of hinges to a central body, so with the four articulations the robot easily adapts and moves along any surface and in any direction, thus improving independently the adherence and adaptability of both tracks on any type of curved, or flat surface.

More specifically, the robot for treating metal structures, of the type comprising two track driving units and displacement by magnetic soles on an endless belt and where said track driving units are longitudinally attached through two intermediate hinges with a central body and two side bodies, wherein said intermediate hinges are configured so that each track driving unit oscillates laterally with respect to the opposite track, and is **characterized in that** it comprises transverse hinging means joined together to the support frame and to the side bodies configured so that each track driving unit turns with respect to the opposite track; and it also comprises, in a front and/or rear position with respect to each track driving unit, stabilization means of the robot assembly configured to maintain a constant and uniform pressure on the treating surface.

The robot object of the present invention can have various uses, among which, in a non-restrictive way, we find with:
- Non-destructive testing with ultrasound (Phased Array), thermography, shearography, and laser technologies.
- Mounting of a basket or conventional platform that serves as a base so that an operator can perform maintenance work (cleaning, sanding, painting, new welds and repairs in general), on the surfaces in which the track joined to the tractive unit on a support travels.
- Video filming or picture taking on the surfaces on both the outside of the metal surfaces and inside of metal tubes (gas pipes) through the installation of high definition cameras on a support in the track.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the figures

Described very briefly hereinafter are a series of drawings that help to better understand the invention and which are expressly related to an embodiment of said invention that is presented as a non-limiting example thereof.
Figure 1 shows a schematized perspective view of the robot for working on external metal structures, object of the present invention.
Figure 2 shows a second schematized perspective view of the robot for working on external metal structures, object of the present invention.
Figure 3 shows a view of the entire operating system of the robot for working on external metal structures, object of the present invention.

### Preferred embodiment of the invention

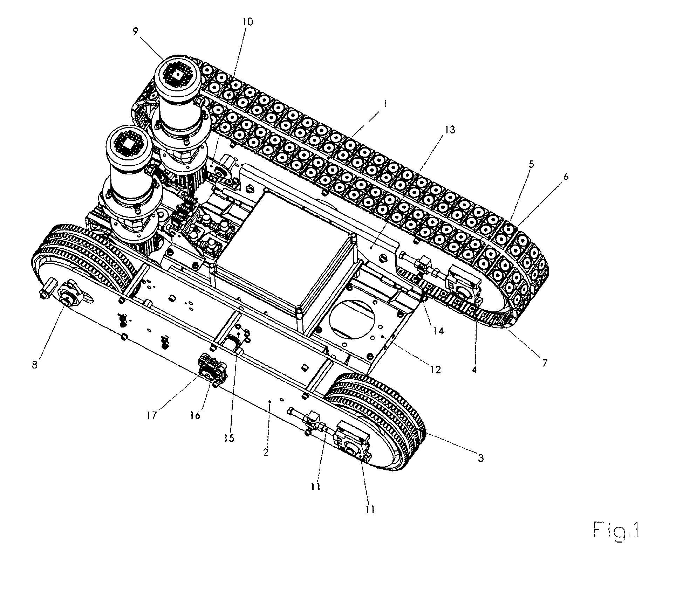

A particular realization of the invention is shown in the accompanying figures. As shown in Figure 1, the robot is configured with two track units 1, wherein each of said tracks comprises a support frame 2 and two gear wheels 3, on which is mounted an endless belt 4 toothed and adapted to the cited gear wheels 3.

On the external part of the cited endless belt 4 is mounted a plurality of magnets 5, preferably shaped in the form of a strip, and wherein each of said strips of magnets 5 are mounted through internal flanges 7 on the external surface of the belt 4, each magnet 5 being housed in its corresponding support 6, preferably made of resistant plastic material and designed so that they do not contact directly on the surface where they are attached, and where the cited supports 6 do.

The mentioned gear wheels 3, on the other hand, are joined together with the support frame 2 by at least one axis 8, comprising said axis a self-aligning ball bearing. It should be noted that one of the gear wheels 3 is free, while the other is a drive wheel, so that on the axis of said drive wheel is mounted the drive motor 9 along with its anti-rotation arm 10. The tension o the belt 4 is achieved by tensors 11.

The two tracks 1 are attached to a central body 12 and two side bodies 13, being joined by two intermediate hinges 14 for side articulations and two hubs 15 with axes 16 and self-aligning bearings 17 for transverse articulations.

Using said hinging means, side (14) and transverse (15, 16, 17), is possible to tilt a track unit 1 with respect to the other independently and in any direction, so it solves the technical problem of adherence and adaptability in any metal surface, preferably ferric steel, and in any direction, logically in collaboration with the belt 4, magnets 5, supports 6 and 7 flanges.

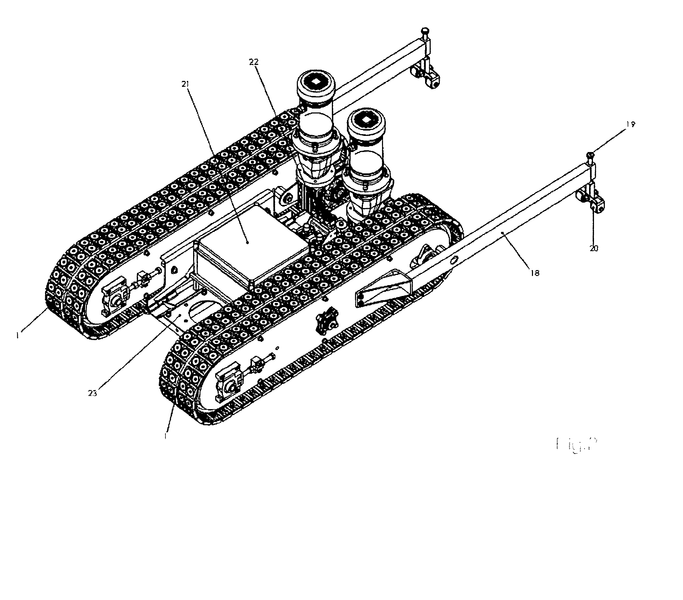

On the other hand, in Figure 2 can be seen the reaction arms 18 which have adjustable pressure screws 19 and self-adaptive wheels 20, control electrical box 21, support and fastening of hoses 22 and fastening gap for different additional and complementary elements 23 variable according to the application of the robot. These elements neutralize the possible detachment of magnets 5 from the upper parts of tracks 1 as a result of the load or pressure of any of the complementary elements that mounted in the gap 23, such as for example a system for cleaning wind turbine towers, or the like.

Although they are not mounted directly on the robot but they are mounted in the box of a transport vehicle, not shown in the accompanying figures, the general electric board 26 of strength and control, that feeds it and controls all movements also form part of the same, as indicated above, and is also predisposed to mount the needed components for the possible complementary models that can be incorporated (cleaning, change and regeneration of oil, etc.). It mainly consist of a watertight cabinet, protective elements, frequency variators, programmable automaton or electronic board, connectors, wiring, terminals blocks, etc. The door will be hinged, safely lockable and in it will be mounted a power switch, a PC with touch screen, a start button and another for emergency stop.

The strength and control, electric hoses 24 for intercommunication between the electric board 26 and control electrical box mounted on the robot as well as hoses and hydraulic unit that would feed them, on the assumption that the drive gearboxes of the robot were hydraulic. All indicated hoses shall be mounted in electrically-commanded winding reels, secured in the robot support intended for this purpose and connected to the strength and control general electric board (in the box) and the control electrical box (on the robot).

It also comprises a wireless remote control remote to work in any comfortable position that allows us to view and manage all the robot movements, and will have the functions of: start, emergency stop, go up, go down, turn right, turn left, and elimination of tilt compensator.

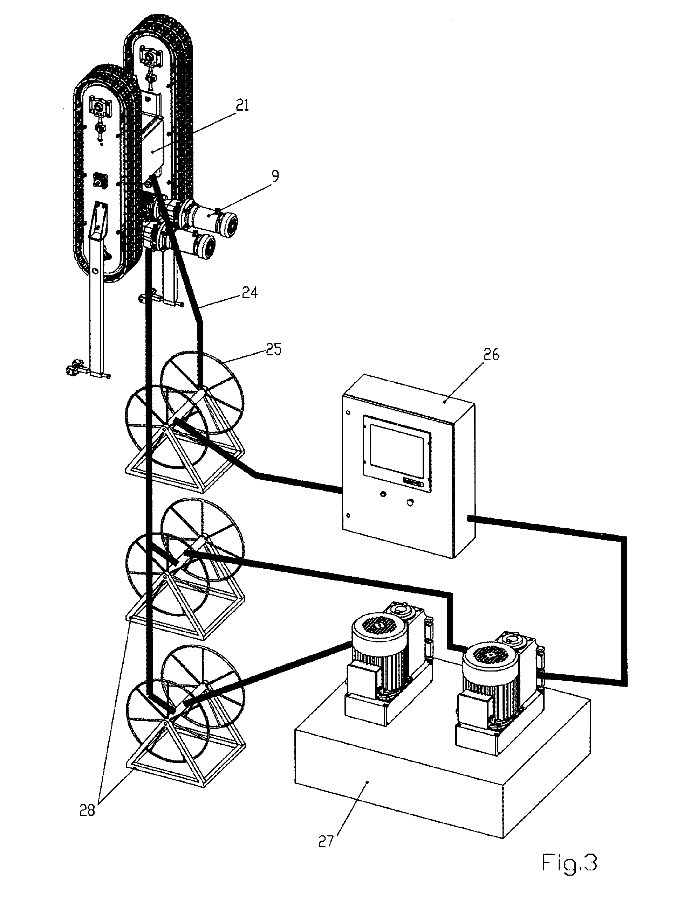

Thus, and more specifically as shown in figure 3, there can be seen the electric hoses 24 connected to the electrical box 21 and to the drive motors 9, and through a winding reel 25 all of them are connected to a general electric board 26. On the assumption that the drive motors were hydraulic, the oil hoses that feed them would go from these to the hydraulic group 27 across the winding reels 28. Such hydraulic group 27 will be fed and controlled by the general electric board 26.

## Claims

1. Robot for treating metal structures, of the type comprising two track driving units (1) and displacement by magnetic soles (5, 6) on an endless belt (4) and where said track driving units (1) are longitudinally attached through two intermediate hinges (14) with a central body (12) and two side bodies (13), wherein said intermediate hinges (14) are configured so that each track driving unit (1) oscillates laterally with respect to the opposite track and that is **characterized in that** it comprises transverse hinging means (15, 16, 17) joined together to the support frame (2) and to the side bodies (13) configured so that each track driving unit (1) turns with respect to the opposite track; and it also comprises, in a front and/or rear position with respect to each track driving unit (1), stabilization means (18, 19, 20) of the robot assembly configured to maintain a constant and uniform pressure on the treating surface.

2. Robot according to the claim 1 wherein the transverse hinging means comprise two hubs (15) with their respective axes (16) and self-aligning bearings (17).

3. Robot according to the claim 1 or 2 wherein the stabilization means comprise at least two reaction arms (18) having adjustable pressure screws (19) and self-adaptive wheels (20).

4. Robot according to the claim 3 wherein the stabilization means also comprise compression springs on the self-adaptive wheels (20).

5. Use of the robot according to any of the claims 1 to 4 in non-destructive testing with ultrasound and/or laser equipment.

6. Use of the robot according to any of the claims 1 to 4 as a basis for maintenance work at a height.

7. Use of the robot according to any of the claims 1 to 4 for video filming and picture taking in both internal and external metal surfaces.
